Europäisches Patentamt

European Patent Office

Office européen des brevets

(11) Publication number: **0 066 061**
**B1**

(12) EUROPEAN PATENT SPECIFICATION

(45) Date of publication of patent specification: **17.12.86**

(51) Int. Cl.⁴: **G 06 F 15/40**

(21) Application number: **82102957.6**

(22) Date of filing: **06.04.82**

(54) Relational algebra engine.

(30) Priority: **18.05.81 JP 74564/81**
**18.05.81 JP 74565/81**

(43) Date of publication of application:
**08.12.82 Bulletin 82/49**

(45) Publication of the grant of the patent:
**17.12.86 Bulletin 86/51**

(84) Designated Contracting States:
**DE FR GB**

(56) References cited:
**US-A-4 110 837**

**INFORMATION PROCESSING 80,
PROCEEDINGS OF IFIP CONGRESS 80, 6th-9th
October 1980, Tokyo, JP, pages 427-432, North-
Holland Publishing Company, Amsterdam, NL
Y. TANAKA et al: "Pipeline searching and
sorting modules as components of a data flow
data-base computer"**

(73) Proprietor: **Kabushiki Kaisha Toshiba**
**72, Horikawa-cho Saiwai-ku**
**Kawasaki-shi Kanagawa-ken 210 (JP)**

(72) Inventor: **Iwata, Kazuhide**
**17-9-201, Nishihikarigaoka 891 Kamishirane-cho**
**Asahi-ku Yokohama-shi (JP)**
Inventor: **Shibayama, Shigeki**
**1020 Hiyoshihoncho**
**Kohoku-ku Yokohama-shi (JP)**
Inventor: **Hidai, Yutaka**
**1-10-20, Gakuenhigashimachi**
**Kodaira-shi Tokyo (JP)**
Inventor: **Oyanagi, Shigeru**
**501 Shinanomachi-heights 9 Minamimotomachi**
**Shinjuku-ku Tokyo (JP)**

(74) Representative: **Henkel, Feiler, Hänzel & Partner**
**Möhlstrasse 37**
**D-8000 München 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to a relational algebra engine as defined in the precharacterising part of claim 1. Such engine performs a set operation at high speed in a data base system which deals with a relational model.

When a data base system is to be established, data abstracted from the real world must be modeled. Data models which are conventionally proposed include hierarchical model, network model and relational model. Among these models, the relational model is most promising. A concept of relation in set theory is applied to this model.

In data base systems which utilize the hierarchical model and the network model, data is linked by a chain of pointers. Therefore, the data structure more or less depends on an application program. On the other hand, in a data base system utilizing the relational model, data is expressed as a set so that the data structure is simple and each data element is highly independent. In other words, the relational data base system has an advantage in that, even if part of the data base is modified, the application program thereof is not influenced. From this point of view, an extensive study has been made in which the relational model is implemented to establish a data base system of large capacity and a knowledge data base system.

General purpose computers which are currently used are designed to perform arithmetic operations at high speed. Therefore, the relational data base processing must be executed with software in a general purpose computer. In a data base which deals with a large capacity of data, the application program becomes very complex and the processing time thereof becomes long. It has been desired, therefore, that hardware for effectively performing the set operation of the relational model in a data base system be developed.

Prior art document "Pipeline Searching and Sorting Modules as Components of a Data Flow Database Computer", by Y. Tanaka et al., published in "Information Processing 80, Proceeding of IFIP Congress 80", 6th—9th October 1980, Tokyo, Japan, pages 427—432, discloses an equivalent structure as recited in the opening passage, in other words, it discloses an apparatus in which data is only sorted: If, for example, one hundred data items are processed, all one hundred data items must be output.

It is an object of the present invention to provide a relational algebra engine which effectively performs at high speed a set operation required for a data base system dealing with a relational model.

The present invention provides a relational algebra engine comprising a control processor; a common bus means; a sort engine having a plurality of first processing elements which are connected in series, each of said first processing elements including first and second buffer memories, a first memory which has a FIFO function and a first processor which sorts input data elements in accordance with a predetermined rule by using said first and second buffer memories and said first memory, said first and second buffer and said first memory which has the FIFO function being disposed in parallel; said relational algebra engine being characterized in that a merge engine having two second processing elements which are disposed in parallel is provided; each of said second processing elements includes a third buffer memory, a second memory which has the FIFO function, a second processor which merges data elements processed in said sort engine by using said third buffer memory and said second memory which has the FIFO function, and an output buffer memory which stores the data elements merged in said second processor; said third buffer memory and said second memory which has the FIFO function are disposed in parallel; said control processor controls said sort engine and said merge engine; and said common bus means connects said sort engine, said merge engine and said control processor.

Thus, a relational algebra engine according to the present invention comprises a sort engine, a merge engine, a control processor and a common bus. The sort engine comprises first processing elements which are mutually connected in series. Each first processing element comprises · two buffer memories, a memory which has a FIFO function, and a processor which sorts data elements by using two types of memories as described above. The merge engine has two second processing elements which are disposed in parallel. Each second processing element comprises a buffer memory, a memory which has a FIFO function, a processor which merges data elements using the memories, and an output buffer memory which stores the merged results. The sort engine, the merge engine and the control processor are connected by the common bus.

In the present invention a data base is processed by sorting and merging, but only necessary data is output from the merging engine.

The relational algebra engine with the above structure performs set operations at high speed and hardware therefore in practice is easy to construct.

Other objects and many of the attendant advantages of the present invention will be readily appreciated as the same becomes better understood by reference to the following detailed description when considered in connection with the accompanying drawings, in which like reference characters designate the same or similar parts throughout the figures thereof and wherein:

Figs. 1 and 2 are views for explaining the concept of a set operation;

Fig. 3 is a block diagram of a relational algebra engine according to one embodiment of the present invention;

Fig. 4 is a timing chart for explaining the process of the relational algebra engine of Fig. 3;

Fig. 5 is a block diagram of a relational algebra engine according to a second embodiment of the present invention; and

Fig. 6 is a timing chart for explaining the process of the relational algebra engine of Fig. 5.

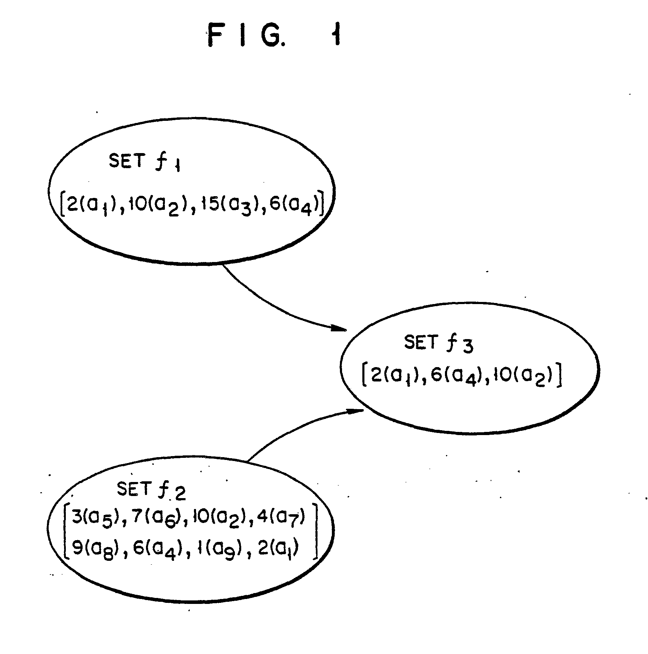

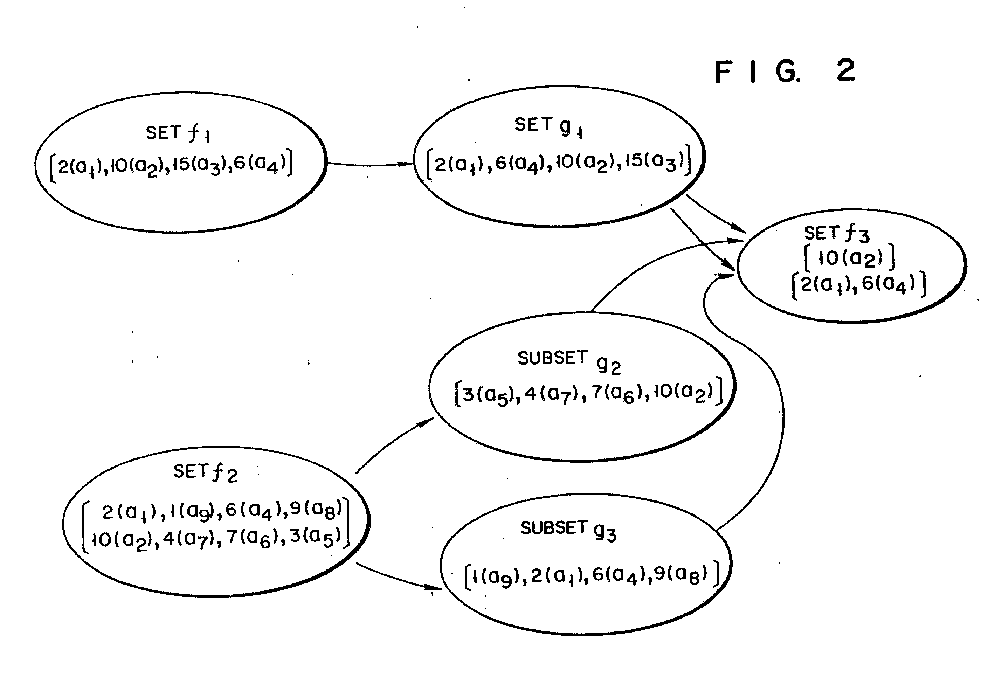

Figs. 1 and 2 are views for explaining the concept of a set operation according to the present invention. In principle, as shown in Fig. 1, a set f3 which comprises data elements common in two sets f1 and f2 is formed. In this set operation, in the first step, a set which has the smaller number of data elements is selected, as shown in Fig. 2. Selected data elements are sorted. The data elements (2, 10, 15, 6) which are input in this order are sorted in accordance with a predetermined rule, for example, a rule in which the smallest number comes first. Thus, the sorted data array (2, 6, 10, 15) is established. This set is defined as a set g1.

In the second step, data elements of the set f2 are input. A subset which has the same number of data elements as in the set f1 is then formed from the set f2. The data elements in the subset are sorted in the same manner as in the set f1. Subsequently, the subsets of the set f2 are formed in the manner as described above. For example, as shown in Fig. 2, when the data elements of the set f2 are input in the order of (3, 7, 4, 10, 9, 6, 1, 2), sorted subsets g2 (3, 4, 7, 10) and g3 (1, 2, 6, 9) are obtained.

In the third step, the data elements of the subset g2 and the set g1 are merged to form the common data element (10). Further, the data elements of the subset g3 and the set g1 are merged to form the common data elements (2, 6). The set f3 (2, 6, 10) is formed from the common data elements.

In the sort/merge algorithm, one set element is generally defined as a tuple of data elements having a plurality of attributes. Referring to Figs. 1 and 2, the set elements are thus expressed as 2(a1), 10(a2),... The attributes are expressed as a1, a2,....

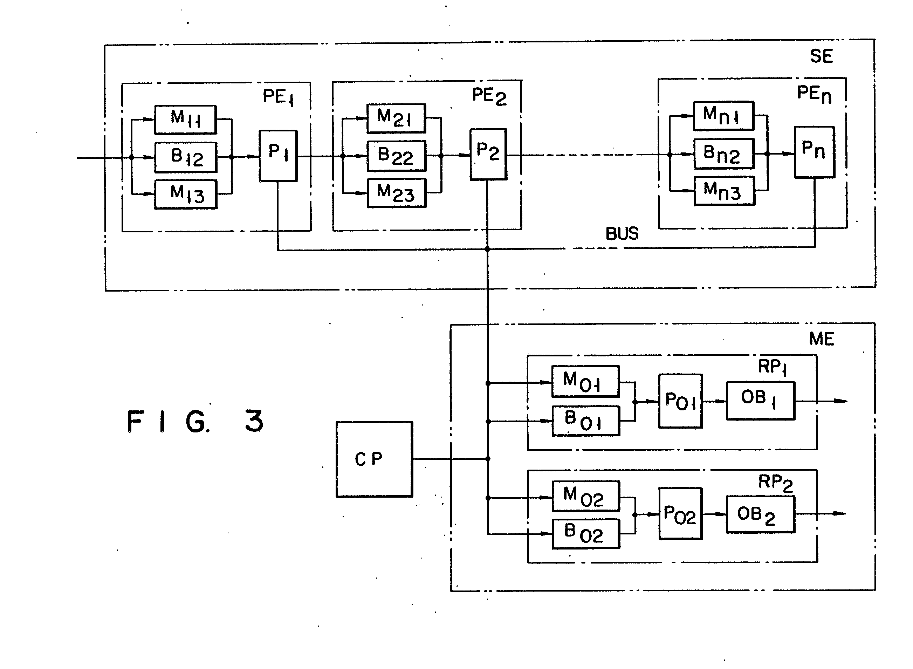

Fig. 3 is a block diagram of a relational algebra engine for performing the sort/merge algorithm according to a first embodiment of the present invention.

A sort engine SE has a plurality (numbering n) of first processing elements PE1, PE2,..., PEn which are connected in series. Each first processing element PEk (k=0, 1, 2,..., n) comprises two buffer memories Mk1 and Mk3, a memory Bk2 which has a first-in/first-out (FIFO) function, and a processor Pk which sorts input data by utilizing the three memories described above. The memory Bk2 comprises a RAM which simultaneously reads out and writes data, that is, performs parallel accessing and which has the FIFO function. The processor Pk compares data stored in the buffer memory Mk1 and the memory Bk2 or in the buffer memory Mk3 and the memory Bk2 and reads out data in accordance with a predetermined rule, that is, a rule in which the smaller data is read out first.

The first processing element PE1 at the first stage of the sort engine SE sorts a first group of two data elements which are selected from the input data array. The first processing element PE2 at the second stage of the sort engine SE sorts a second group of four data elements, that is, two groups of two data elements which are sorted in the first processing element PE1 at the first stage of the sort engine SE. The first processing element PEn at the nth stage of the sort engine SE sorts the nth group of data elements which number $2^n$, that is, two (n−)th groups of data elements which are sorted by the first processing element Pen−1 at the (n−1)th stage of the sort engine SE. In general, the data elements which number $2^n$ are sorted through the first processing elements at the nth stage. In other words, when input data elements which number n $(=\log_2 2^n)$ are to be sorted, the first processing elements which number $\log_2 n$ are required

A merge engine ME comprises two second processing elements RP1 and RP2 which are disposed parallel to each other. The second processing element RP1 or RP2 comprises a buffer memory M01 or M02, a memory B01 or B02 which has the FIFO function, a processor P01 or P02 which merges input data elements by utilizing the buffer memory M01 or M02 and the memory B01 or B02, and an ouput buffer memory OB1 or OB2 which writes the coincident data by the merge algorithm. The "coincident data" represent, for instance, the required data set $f_3$, as shown in Fig. 1. The processor P01 reads out the coincident data by sequentially comparing groups of data which are stored in the buffer memory M01 and the memory B01 which has the FIFO function. The coincident data is then written in the output buffer memory OB1. The processor P02 operates in the same manner as the processor P01. In particular, the processor P02 reads out the coincident data by sequentially comparing groups of data elements which are stored in the buffer memory M02 and the memory B02 which has the FIFO function. The coincident data is then written in the ouput buffer memory OB2.

These two processing elements RP1 and RP2 continuously perform the merge operation in synchronism with the processing speed of the sort engine by alternately receiving the sorted subsets transmitted from the sort engine.

The merge engine ME with the above structure is connected to the sort engine SE and a control processor CP through a common bus. The control processor CP first controls the sort engine SE so as to sort the input data elements. The sorted data elements are fed to the merge engine ME wherein these data elements are merged. In this manner, the control processor CP controls the pipeline processing of the algorithm of the set operation.

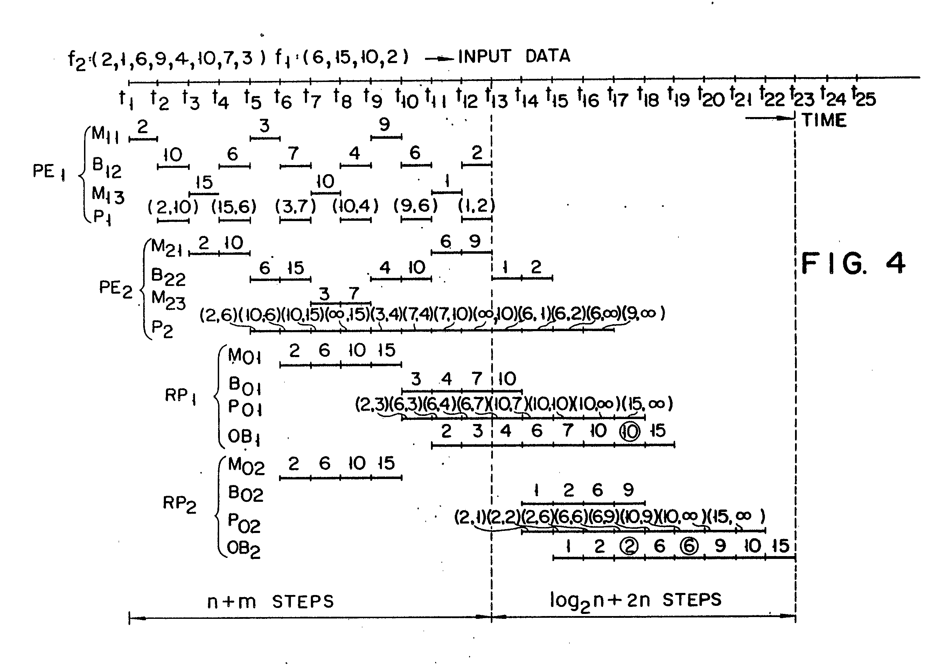

The set operation of the relational algebra engine according to the present invention will be described with reference to the timing chart of Fig. 4. The set operation aims at obtaining the set f3 by selecting the common data elements of the sets f1 and f2. The set f1 has data elements (2, 10, 15, 6) and the set f2 has data elements (3, 7, 10, 4, 9, 6, 1, 2). Referring to Fig. 4, time is plotted in the abscissa of the timing chart. The processing data elements and their status are plotted in the ordinate of the timing chart.

Assume that the number of data elements in the set f1 is defined as n and the number of data elements in the set f2 is defined as m. A set which has a smaller number of data elements is first input. In the example of Fig. 4, since n=4 and m=8, the data elements of the set f1 are first input. The data elements are sequentially written in the memories M11, B12 and M13 of the first processing element PE1 in the first stage of the sort engine SE in the order of M11, B12, M13, B12, M11, B12,.... Every time a group of two data elements is input to the processor P1 at the first stage, the two data elements are compared. The input data elements are then sorted by reading out the smaller data element first, for example.

The two groups of two data elements (2, 10) and (6, 15) are supplied to the first processing element PE2 at the second stage. The first processing element PE2 at the second stage compares the input data elements and reads out the smaller data element first. The data elements in the same group such as (2, 10) are already sorted in the first processing element PE1 in the first stage. Therefore, the data elements in the different groups need only be compared. When a data element which is to be compared is not present in the opposite group, a data element which does not have the corresponding data element is compared with a predetermined value, for example, the infinite ($\infty$). When the data elements are to be sorted from the largest data element, the above-described predetermined value is zero (0). The sorted set f1 (2, 6, 10, 15) is transferred to the merge engine ME and written in the buffer memories M01 and M02, respectively.

The data elements (3, 7, 10, 4, 9, 6, 1, 2) of the set f2 are then input to the first processing element PE1 at the first stage of the sort engine SE after the data elements (2, 10, 15, 6) of the set f1 have been input. The data elements of the set f2 are sorted in the same manner as described above. When the data elements (3, 7, 10, 4) whose number is the same as that of the data elements of set f1 are sorted from the set f2, the data elements (3, 4, 7, 10) are written in the memory B01 of the merge engine ME. The processor P01 compares data elements of the memories M01 and B01 and detects the common data (10) between the subsets.

While the second processing element RP1 at the first stage merges the data elements, the sort engine SE sorts the remaining data elements (9, 6, 1, 2) of the set f2. The sorted data elements (1, 2, 6, 9) are sequentially stored in the memory B02 of the second processing element RP2 at the second stage of the merge engine ME. The second processing element RP2 at the second stage of the merge engine ME performs the merge in the same manner as the second processing element RP1 at the first stage of the merge engine ME and detects the common data elements (2, 6).

Every time subsets of the set f2 which comprise the same number of data elements as that of the set f1 are obtained, they are alternately written in the memories B01 and B02 and merged therein. The common data elements which are obtained by merging are written in the output buffer memories OB1 and OB2. When the processing for all the input data elements is completed, the set f3 (10, 2, 6) is produced by the set operation.

According to the relational algebra engine which executes processing as described above, the processing results are obtained at extremely high speed. When the number of data elements of the sets f1 and f2 is, respectively, defined as n and m (n<m), n+m steps are required for data transfer. Further, when data transfer is completed, the following number of steps are required:

$$\log_2 n + 2n \qquad (1)$$

Relation (1) is apparently independent of m, the number of data elements of the set f2. Here, $\log_2 n$ is the number of the processing elements of the sort engine SE required when the number of data elements is n, and 2n is the number of steps required for the final comparison of data elements in the merge engine ME. For example, as shown in Fig. 4, when the number of data elements of the sets is given as n=4 and m=8, respectively, the comparing steps number $\log_2 4 + (2 \times 4) = 10$. The data transfer requires n+m=12 steps. As a result, the sort and merge operations are completed in 22 steps. Further, when the number of data elements (key words) of the set f1 is 8 and the number of data elements (key words of patent information) is 10,000, data detection is completed in 19 $(= \log_2 8 + (2 \times 8))$ steps after the data transfer. These steps are independent of the set which has data elements larger than the other set, thus accomplishing processing at extremely high speed.

The relational algebra engine according to the present invention has another advantage in that the memory capacity is made small. Each memory has the capacity for storing only twice the number of data elements of the set f1. Referring to Fig. 4, the memory has only the capacity of 8 ($4 \times 2$) words. Even if the set f2 has 10,000 data elements, the data elements are divided into groups of four data elements. Every four data elements are, respectively, sorted. The sorted results are alternately stored in the memories B01 and B02 of the merge engine ME. Therefore, the storage structure is made simple. The output buffer memories OB1 and OB2 store only the coincident data, as defined above which is indicated by a circle, so that the capacities thereof are made compact.

The above-mentioned advantage is based on the structure in which two second processing elements RP1 and RP2 which are parallel constitute the merge engine ME. On the other hand, if the merge operation is performed by the second processing element RP1 at the first stage of the merge engine ME only, time required for the merge operation is made longer ·than that required for the sort operation. Therefore, a memory of large capacity which solves the problem of time lag is required. When the number of the second processing elements of the merge engine ME is increased, the second processing elements do not receive the inputs since the sort processing time is longer than the merge processing time. As a result, when two second processing elements of the merge engine ME are disposed in the merge engine ME, the merge processing time matches the sort processing time, so that the relational algebra engine properly operates.

The sort engine SE continuously sorts by the pipeline operation the subsets g2 and g3 which have the same number of data elements as defined by the number of data elements of the set f1. Therefore, time required for the sort operation is very short. Further, while the set f1 and the subset g2 of the set f2 are merged, the sort engine SE sorts the subset g3 of the set f2, thus accomplishing efficient processing. As is apparent from the above description, even if the number of data elements of the set f1 is larger than that in the above embodiment, the processing is continuously performed in a predetermined number of steps in accordance with relation (1).

The device according to the present invention is simple in construction as shown in Fig. 3. The operation of this device is easily controlled. Since the processing elements of the same structure are connected in series through the common bus to the control processor, the sort result is read out from an arbitrary processing element. Therefore, the system design and implementation of the device is made simple. The number of the processing elements of sort engines is arbitrarily determined in accordance with the amount of data to be handled.

According to the relational algebra engine of the present invention, the set operation for a great amount of data in the data base system based on the relational model is performed at high speed with good efficiency.

In the first embodiment, the algebra operation for the common set is described. However, other set operations are also performed. For example, a join operation which is the most complicated set operation of the relational algebra of the relational data base system is performed at high speed. According to this join operation, for example, a new relation is established from two different relations by utilizing the common attribute. One set indicates the relation between a record number and a composer, as shown in Table 1. Another set indicates the relation between the record number and the title of a musical composition, as shown in Table 2. By using these sets, a new set which indicates the relation between the composer and the title of a musical composition is established as shown in Table 3.

TABLE 1

| Record number | Composer |
|---|---|
| 100 | T |
| 14 | O |
| 73 | S |
| 2 | H |
| 56 | I |
| 27 | B |
| 31 | A |

TABLE 2

| Record number | Title |
|---|---|
| 94 | s |
| 61 | o |
| 14 | k |
| 106 | e |
| 40 | n |
| 100 | h |
| 2 | w |
| 30 | a |
| 62 | l |
| 88 | m |
| 19 | x |
| 45 | d |
| 77 | f |

TABLE 3

| Record number | Composer | Title |
|---|---|---|
| 2 | H | w |
| 14 | O | k |
| 100 | T | h |

The join operation of the above-mentioned relations is performed as follows. The sets in Tables 1 and 2 are sorted in accordance with the common attribute, that is, the record number. Thereafter, these sets are joined and the common record numbers are selected. In accordance with the common record numbers, the corresponding composers and the title are detected, respectively.

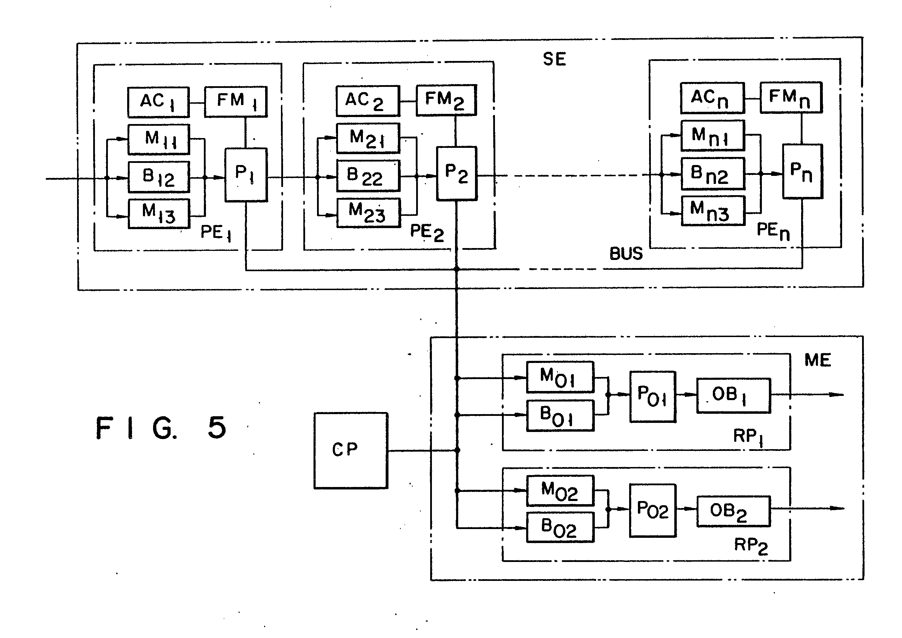

In the set operations so far, a group of set elements which are based on a tuple as the unit and which have a plurality of attributes are stored in the memory. This group of set elements is sorted and the sorted groups of set elements are merged. As a second embodiment, a relational algebra engine which is capable of sorting data sets based on the attributes will be described with reference to Fig. 5.

The sort engine SE comprises a plurality of first processing elements PE1, PE2,..., PEn which are connected in series. The first processing element PEk (k=0, 1, 2..., n) comprises the two buffer memories Mk1 and Mk3, the memory Bk2 which has the FIFO function, the processor Pk which sorts input data elements in accordance with a predetermined rule by utilizing the buffer memories Mk1 and Mk3 and the memory Bk2, a flag memory FMk which stores processing steps of the processor Pk and an address counter ACk which controls the flag memory FMk. The memory Bk2 is a RAM which is capable of performing parallel access for reading out and writing data and which has the function of first-in/first-out (FIFO). The processor Pk compares data which are stored in the memories Mk1 and Bk2 or the memories Mk3 and Bk2 by utilizing the FIFO function of the memory Bk2. The processor Pk then reads out data in accordance with a predetermined rule, that is, a rule in which the smallest data element is read out first. The sort processing steps of the first processing element PEk are sequentially stored in the flag memory FMk which is, in turn, controlled by the address counter ACk. The processor Pk sorts other attributes with reference to the previously input attributes in accordance with the storage process of the flag memory FMk. In the sort engine SE, the first processing elements PE1, PE2,..., PEn which are connected in series function as the pipeline so as to sort a series of data.

The first processing element PE1 at the first stage of the sort engine SE sorts two data elements every time two data elements are input. The first processing element PE2 at the second stage of the sort engine SE sorts two groups of two data elements every time the groups are input which are sorted in the first processing element PE1 at the first stage. Within the same group, the data elements are already sorted. Therefore, comparison is only made between the data elements in different groups. One data element of one group is, for example, compared with one data element of the other group and the smaller data element is read out. The remaining data element and one data element of the other group are sorted. This operation is sequentially repeated. Therefore, a group of four data elements which are already sorted is read out from the first processing element PE2 at the second stage of the sort engine SE. In the same manner as described above, every time each first processing element at each stage of the sort engine SE receives two groups of data elements, the sort processing is performed. When the data elements of one group are all read out, the data elements in the other group are compared with the infinitive ($\infty$) or zero (0).

The merge engine ME has the same structure as the merge engine ME in the first embodiment. The same reference numerals as in the second embodiment denote the same parts as in the first embodiment, and the detailed description thereof will be omitted.

The merge engine ME is connected to the sort engine SE and the control processor CP through the common bus. The control processor CP transfers the sorted results of the sort engine SE to the merge engine ME.

In order only to obtain the sorted results, the sorted results may be stored in the output buffer memories OB1 and OB2 through the memories B01 and B02. The stored data may be accessed as needed. Alternatively, the stored results may be directly written in the output buffer memories OB1 and OB2 in accordance with the direct write mode.

The relational algebra engine with the above structure has the advantages for executing the following operation. Table 4 shows relations among the attributes such as the record number, the title, the composer, and the record company. Two attributes, for example, the record number and the composer are selected and the data elements are arranged in the order of the record number. Table 5 shows the results of this operation.

TABLE 4

| Record number | Title | Composer | Record company |
|---|---|---|---|
| 3 | C | a | T |
| 5 | A | b | S |
| 6 | F | c | W |
| 4 | B | d | T |
| 1 | E | e | W |
| 2 | D | f | T |

TABLE 5

| Record number | Composer |
|---|---|
| 1 | e |
| 2 | f |
| 3 | a |
| 4 | d |
| 5 | b |
| 6 | c |

When the above set operation is to be performed, two methods for storing the relations of the attributes in the memory are considered. First, based on the tuples, groups of data elements such as (3, C, a, T), (5, A, b, S),..., (2, D, f, T) are formed. These groups of data elements are sequentially stored. Second, based on the attributes, groups of data elements such as (3, 5, 6,...), (C, A, F,...), (a, b, c,...) and (T, S, W,...) are formed. These groups are sequentially stored. These data storage means depend on the data base design. It is very difficult to assert that one method is superior to the other. The superiority of the method is based on each individual case of design. However, in the above example, the method which has attributes as the basis is more advantageous. In the method which has the tuple as the basis for the set operation, data for the title and the record company become redundant so that excessive data transfer time is required. On the other hand, in the method which has the attribute as the basis for storing data, data for the title and the record company are eliminated and data for the record number and the composer are transferred to execute the set operation. Therefore, the data transfer time between the memories and the processor can be shortened.

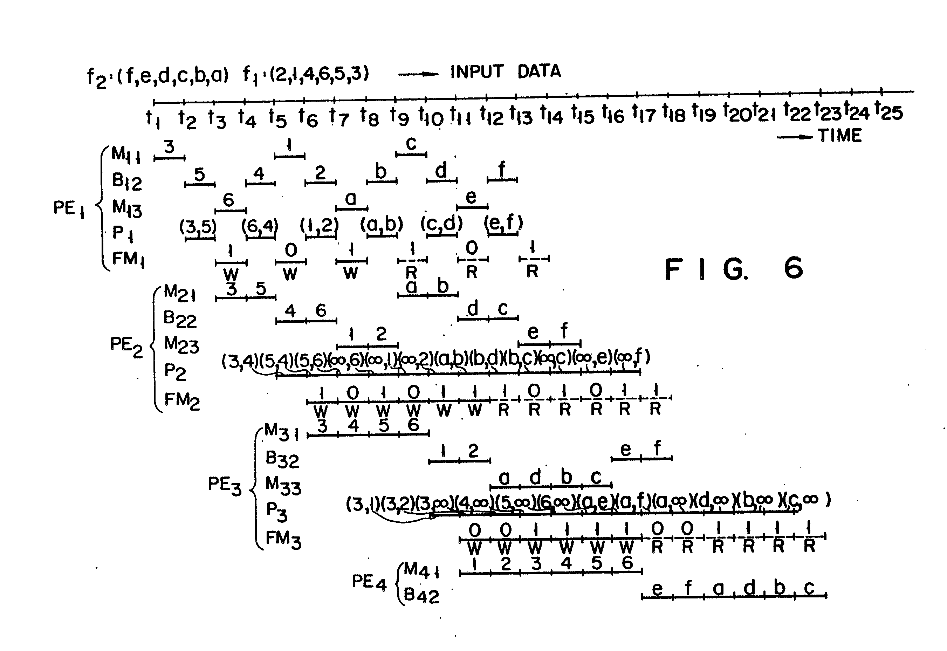

The set operation of the relational algebra engine according to the second embodiment of the present invention will be described with reference to the timing chart of Fig. 6. The set f1 has data elements (3, 5, 6, 4, 1, 2) of the record number. The set f2 has data elements (a, b, c, d, e, f) of the composer. Time is plotted in the abscissa of the timing chart of Fig. 6. The processing elements and their statuses are plotted in the ordinate of the timing chart of Fig. 6. The data elements (3, 5, 6, 4, 1, 2) of the record number are first input and sorted in the same manner as in the first embodiment. The sort processing step of the processor Pk is stored in the flag memory FMk (k=0, 1, 2,..., n). The processor Pk compares data from the buffer memory Mk1 or Mk3 with data from the memory Bk2 which has the FIFO function. The smaller data is then supplied to the processing element at the next stage. If data which is to be supplied to the next processing element has been stored in the buffer memory Mk1 or Mk3, the state "1" is written in the flag memory FMk. When this data to be supplied to the processing element has been stored in the memory Bk2, the state "0" is written in the flag memory FMK. The data elements (a, b, c, d, e, f) of the composer which are input after the data elements of the record member are processed by the processor Pk on the basis of the sort processing step of the record number which is stored in the flag memory FMk. In the figure, W denotes the operation for writing the sort processing step in the flag memory FMk. R denotes the operation for reading out the sort processing step from the flag memory FMk. Therefore, the sets f1 and f2 are sorted in the first processing elements PE1, PE2, and PE3. The sorted results are stored in the memories M41 and B42 of the first processing element PE4. The stored data is read out through the merge engine ME as needed.

In the second relational algebra engine, the sort processing of data is continuously performed in the pipeline manner, accomplishing processing effectively in a short period of time. Further, other attributes may be easily sorted in accordance with the order of the sorted attribute.

As described above, a new relation can be established from one relation. Further, a new relation from a plurality of relations, that is, the join operation, may be also accomplished.

**Claims**

1. A relational algebra engine comprising a control processor (CP); a common bus means (BUS); a sort engine (SE) having a plurality of first processing elements (PE1, PE2,..., PEn) which are connected in series, each of said first processing elements including first and second buffer memories (M11, M21,..., Mn1; M13, M23,..., Mn3), a first memory which has a FIFO function (B12, B22,..., Bn2) and a first processor (P1, P2,..., Pn) which sorts input data elements in accordance with a predetermined rule by using said first and second buffer memories and said first memory, said first and second buffer memories and said first memory which has the FIFO function being disposed in parallel; characterized in that a merge engine (ME) having two second processing elements (RP1, RP2) which are disposed in parallel is provided; each of said second processing elements includes a third buffer memory (M01, M02), a second memory which has the FIFO function (B01, B02), a second processor (P01, P02) which merges data elements processed in said sort engine by using said third buffer memory and said second memory which has the FIFO function, and an output buffer memory (OB1, OB2) which stores the data elements merged in said second processor; said third buffer memory and said second memory which has the FIFO function are disposed in parallel; said control processor controls said sort engine and said merge engine; and said common bus means connects said sort engine, said merge engine and said control processor.

2. A relational algebra engine according to claim 1, characterized in that a flag memory (FM1, FM2,..., FMn) is included in said first processing elements, said flag memory storing sort processing steps of a given attribute of the relational data base and processing the other attributes in accordance with said sort processing steps.

3. A method for operating the relational algebra engine according to claim 1 or 2, characterized in that

a first set which has the smallest number of data elements input and processed in said sort engine is stored in said third buffer memory, and

subsets of a second set which are input in said sort engine after said first set and sorted therein are stored in said second memory which has the FIFO function, said subsets having the same number of data elements as the number of data elements of said first set, whereby said second processor merges outputs from said third buffer memory and said second memory which has the FIFO function.

**Patentansprüche**

1. Abhängige Algebramaschine, umfassend einen Steuerprozessor (CP), eine Sammelschieneneinrichtung (BUS), eine Sortiermaschine (SE) mit einer Anzahl erster, in Reihe geschalteter Verarbeitungselemente (PE1, PE2, ..., PEn), die jeweils erste und zweite Zwischen- oder Pufferspeicher (M11, M21, ..., Mn1; M13, M23, ..., Mn3), einen ersten Speicher mit einer Silo- oder FIFO-Funktion (B12, B22, ..., Bn2) und einen ersten Prozessor (P1, P2, ..., Pn), welcher Eingabedatenelemente nach Maßgabe einer vorbestimmten Regel unter Heranziehung der ersten und zweiten Pufferspeicher und des ersten Speichers sortiert, aufweisen, wobei die ersten und zweiten Pufferspeicher und der erste Speicher mit einer FIFO-Funktion parallel (zueinander) angeordnet sind, dadurch gekennzeichnet, daß eine Mischmaschine (ME) mit zwei zweiten, parallel angeordneten Verarbeitungselementen (RP1, RP2) vorgesehen ist, jedes der zweiten Verarbeitungselemente einen dritten Zwischen- oder Pufferspeicher (M01, M02), einen zweiten Speicher mit der Silo- oder FIFO-Funktion (B01, B02), einen zweiten Prozessor (P01, P02), welcher in der Sortiermaschine verarbeitete Datenelemente unter Heranziehung des dritten Pufferspeichers und des zweiten Speichers mit FIFO-Funktion mischt, und einen Ausgangspufferspeicher (OB1, OB2, der die im zweiten Prozessor gemischten Datenelemente speichert, aufweist, der dritte Pufferspeicher und der zweite Speicher mit FIFO-Funktion parallel angeordnet sind, der Steuerprozessor die Sortiermaschine und die Mischmaschine steuert und die Sammelschieneneinrichtung die Sortiermaschine, die Mischmaschine und den Steuerprozessor verbindet.

2. Abhängige Algebramaschine nach Anspruch 1, dadurch gekennzeichnet, daß in den ersten Verarbeitungselementen ein Kennzeichenspeicher (FM1, FM2, ..., FMn) vorhanden ist, welcher Sortierverarbeitungsschritte eines gegebenen Attributs der abhängigen oder Vergleichs - Datenbasis speichert und die anderen Attribute nach Maßgabe der Sortierverarbeitungsschritte verarbeitet.

3. Verfahren zum Betreiben der abhängigen Algebramaschine nach Anspruch 1 oder 2, dadurch gekennzeichnet, daß

ein erster Satz, der die kleinste Zahl von eingegebenen und in der Sortiermaschine verarbeiteten Datenelementen aufweist, im dritten Pufferspeicher (ab) gespeichert wird, und

Untersätze eines zweiten Satzes, die nach dem ersten Satz in die Sortiermaschine eingegeben und darin sortiert werden, im zweiten Speicher mit der FIFO-Funktion gespeichert werden, wobei die Untersätze dieselbe Zahl von Datenelementen wie die Zahl der Datenelemente wie die Zahl der Datenelemente des ersten Satzes aufweisen, so daß der zweite Prozessor Ausgaben von dritten Pufferspeicher und vom zweiten Speicher mit der FIFO-Funktion mischt.

**Revendications**

1. Moteur algébrique relationnel comprenant un processeur de commande (CP), une ligne commune (BUS), un moteur de tri (SE) ayant plusieurs premiers éléments de traitement (PE1, PE2, ... PEn) qui sont connectés en série, chacun des premiers éléments de traitement comprenant une première et une seconde mémoire tampon (M11, M21, ..., Mn1, M13, M23, ..., Mn3), une première mémoire qui a une fonction premier entré-premier sorti (B12, B22, ..., Bn2) et un premier processeur (P1, P2, ..., Pn) qui trie des éléments de données introduits en fonction d'une règle prédéterminée par utilisation de la première et de la seconde mémoire tampon et de la première mémoire, la première et la seconde mémoire tampon et la première mémoire qui a la fonction premier entré-premier sorti étant montées en parallèle, caractérisé en ce qu'il comprend un moteur de fusion (ME) ayant deux seconds éléments de traitement (RP1, RP2) disposés en parallèle, chacun des seconds éléments de traitement comprend une troisième mémoire tampon (M01, M02), une seconde mémoire qui a la fonction premier entré-premier sorti (B01, B02), un second processeur (P01, P02) qui fusionne les éléments de données traités dans le moteur de tri par utilisation de la troisième mémoire tampon et de la seconde mémoire qui a la fonction premier entré-premier sorti, et une mémoire tampon de sortie (OB1, OB2) qui conserve les éléments de données fusionnés dans le second processeur, la troisième mémoire tampon et la seconde mémoire qui a la fonction premier entré-premier sortie étant montées en parallèle, le processeur de commande commandant le moteur de tri et le moteur de fusion, et la ligne commune connnectant le moteur de tri, le moteur de fusion et le processeur de commande.

2. Moteur algébrique relationnel selon la revendication 1, caractérisé en ce qu'une mémoire de drapeau (FM1, FM2, ..., FMn) est incorporée aux premiers éléments de traitement, la mémoire de drapeau conservant des étapes de traitement de tri d'un attribut donné de la base de données relationnelle et traitant les autres attributs en fonction des étapes de traitement de tri.

3. Procédé de mise en oeuvre du moteur algébrique relationnel selon l'une des revendications 1 et 2, caractérisé en ce que:

un premier ensemble qui a le plus petit nombre d'éléments de données introduits et traités dans le moteur de tri est conservé dans la troisiéme mémoire tampon, et

des sous-ensembles d'un second ensemble qui sont introduits dans le moteur de tri après le premier ensemble et triés à l'intérieur sont conservés dans la seconde mémoire qui a la fonction premier entré-premier sorti, les sous-ensembles ayant le même nombre d'éléments de données que le premier ensemble, si bien que le second processeur fusionne les données de sortie de la troisième mémoire tampon et de la seconde mémoire qui a la fonction premier entré-premier sorti.

# F I G. 1

SET $f_1$

$[2(a_1), 10(a_2), 15(a_3), 6(a_4)]$

SET $f_3$

$[2(a_1), 6(a_4), 10(a_2)]$

SET $f_2$

$\begin{bmatrix} 3(a_5), 7(a_6), 10(a_2), 4(a_7) \\ 9(a_8), 6(a_4), 1(a_9), 2(a_1) \end{bmatrix}$

FIG. 2

SET $f_1$

$\left[ 2(a_1), 10(a_2), 15(a_3), 6(a_4) \right]$

SET $g_1$

$\left[ 2(a_1), 6(a_4), 10(a_2), 15(a_3) \right]$

SET $f_3$

$\left[ 10(a_2) \right]$

$\left[ 2(a_1), 6(a_4) \right]$

SUBSET $g_2$

$\left[ 3(a_5), 4(a_7), 7(a_6), 10(a_2) \right]$

SET $f_2$

$\left[ \begin{array}{l} 2(a_1), 1(a_9), 6(a_4), 9(a_8) \\ 10(a_2), 4(a_7), 7(a_6), 3(a_5) \end{array} \right]$

SUBSET $g_3$

$\left[ 1(a_9), 2(a_1), 6(a_4), 9(a_8) \right]$

0 066 061

F I G. 3

0 066 061

f₂(2,1,6,9,4,10,7,3) f₁(6,15,10,2) → INPUT DATA

$t_1$ $t_2$ $t_3$ $t_4$ $t_5$ $t_6$ $t_7$ $t_8$ $t_9$ $t_{10}$ $t_{11}$ $t_{12}$ $t_{13}$ $t_{14}$ $t_{15}$ $t_{16}$ $t_{17}$ $t_{18}$ $t_{19}$ $t_{20}$ $t_{21}$ $t_{22}$ $t_{23}$ $t_{24}$ $t_{25}$

→ TIME

PE₁ { $M_{11}$ : 2    3    9
$B_{12}$ : 10   6   7   4   6   2
$M_{13}$ : 15        10        1
$P_1$ : (2,10) (15,6) (3,7) (10,4) (9,6) (1,2)

PE₂ { $M_{21}$ : 2 10            6 9
$B_{22}$ : 6 15        4 10        1 2
$M_{23}$ : 3 7
$P_2$ : (2,6)(10,6)(10,15)(∞,15)(3,4)(7,4)(7,10)(∞,10)(6,1)(6,2)(6,∞)(9,∞)

RP₁ { $M_{01}$ : 2 6 10 15
$B_{01}$ : 3 4 7 10
$P_{01}$ : (2,3)(6,3)(6,4)(6,7)(10,7)(10,10)(10,∞)(15,∞)
$OB_1$ : 2 3 4 6 7 10 ⑩ 15

RP₂ { $M_{02}$ : 2 6 10 15
$B_{02}$ : 1 2 6 9
$P_{02}$ : (2,1)(2,2)(2,6)(6,6)(6,9)(10,9)(10,∞)(15,∞)
$OB_2$ : 1 2 ② 6 ⑥ 9 10 15

n+m STEPS          $\log_2 n + 2n$ STEPS

FIG. 4

F I G. 5

$f_2 \cdot (f,e,d,c,b,a)$  $f_1 \cdot (2,1,4,6,5,3)$ ——► INPUT DATA

$t_1$ $t_2$ $t_3$ $t_4$ $t_5$ $t_6$ $t_7$ $t_8$ $t_9$ $t_{10}$ $t_{11}$ $t_{12}$ $t_{13}$ $t_{14}$ $t_{15}$ $t_{16}$ $t_{17}$ $t_{18}$ $t_{19}$ $t_{20}$ $t_{21}$ $t_{22}$ $t_{23}$ $t_{24}$ $t_{25}$

——► TIME

## F I G. 6

$PE_1$ {

$M_{11}$  3   1   c

$B_{12}$   5   4   2   b   d   f

$M_{13}$   6   a   e

$P_1$   (3,5)  (6,4)  (1,2)  (a,b)  (c,d)  (e,f)

$FM_1$   $\frac{1}{W}$  $\frac{0}{W}$  $\frac{1}{W}$  $\frac{1}{R}$  $\frac{0}{R}$  $\frac{1}{R}$

$PE_2$ {

$M_{21}$   3  5   a  b

$B_{22}$   4  6   d  c

$M_{23}$   1  2   e  f

$P_2$   (3,4)(5,4)(5,6)(∞,6)(∞,1)(∞,2)(a,b)(b,d)(b,c)(∞,c)(∞,e)(∞,f)

$FM_2$   $\frac{1}{W}$ $\frac{0}{W}$ $\frac{1}{W}$ $\frac{0}{W}$ $\frac{1}{W}$ $\frac{1}{W}$ $\frac{1}{R}$ $\frac{0}{R}$ $\frac{1}{R}$ $\frac{0}{R}$ $\frac{1}{R}$ $\frac{1}{R}$

$PE_3$ {

$M_{31}$   3  4  5  6

$B_{32}$   1  2   e  f

$M_{33}$   a  d  b  c

$P_3$   (3,1)(3,2)(3,∞)(4,∞)(5,∞)(6,∞)(a,e)(a,f)(a,∞)(d,∞)(b,∞)(c,∞)

$FM_3$   $\frac{0}{W}$ $\frac{0}{W}$ $\frac{1}{W}$ $\frac{1}{W}$ $\frac{1}{W}$ $\frac{1}{W}$ $\frac{0}{R}$ $\frac{0}{R}$ $\frac{1}{R}$ $\frac{1}{R}$ $\frac{1}{R}$ $\frac{1}{R}$

$PE_4$ {

$M_{41}$   1  2  3  4  5  6

$B_{42}$   e  f  a  d  b  c